# EUROPÄISCHE PATENTANMELDUNG

(11) **EP 4 300 883 A1**
(43) Veröffentlichungstag der Anmeldung: **03.01.2024**
(21) Anmeldenummer: 22182241.4
(22) Anmeldetag: 30.06.2022
(51) Int. Cl.: H04L 9/40

(54) **NETZWERKADAPTER GEEIGNET ZUM UNTERSTÜTZEN EINES BERECHTIGTEN SENDENS UND/ODER EMPFANGENS VON DATEN**

(71) Anmelder: Siemens Mobility GmbH, 81739 München (DE)
(72) Erfinder: Aschauer, Hans, 81829 München (DE); Herrmann, Jan, 80999 München (DE); Seltzsam, Stefan, 85653 Aying (DE); Wimmer, Martin, 85579 Neubiberg (DE)
(74) Vertreter: Siemens Patent Attorneys

(57) **Zusammenfassung**

Die Erfindung beansprucht einen Netzwerkadapter (AD) geeignet zum Unterstützen eines Sendens und/oder Empfangens von Daten von einer ersten Kommunikationseinrichtung in ein und/oder von einem Kommunikationsnetz, aufweisend:
- eine erste Anschlusseinheit (IF0), die mit der mindestens einen ersten Kommunikationseinrichtung zur bidirektionalen Übertragung von Daten physikalisch verbindbar ist, - eine zweite Anschlusseinheit (IF1), die mit mindestens einer zweiten Kommunikationseinrichtung des Kommunikationsnetzes zur bidirektionalen Übertragung von Daten physikalisch verbindbar ist, - eine Vermittlereinheit (LC), die dazu konfiguriert ist, eine Authentifizierung basierend auf Zugangsdaten und - geheimnissen stellvertretend für die erste Kommunikationseinrichtung (D) und für den Netzwerkadapter selbst sowie parallel einen Berechtigungsnachweis anzufragen, der der ersten Kommunikationseinrichtung ein berechtigtes Senden und/oder Empfangen der Daten über die genannten Anschlusseinheiten im Nachgang des Sendens und/oder Empfangens der Daten bescheinigt, - eine Datenabgriffeinheit (G), die dazu konfiguriert ist, die an der ersten Anschlusseinheit (IF0) durchgeleiteten Daten abzugreifen und eine Datenverbindung zur Vermittlereinheit herzustellen, über welche die abgegriffenen Daten an die Vermittlereinheit übertragbar sind oder übertragen werden, und - eine dritte Anschlusseinheit (IF2), die dazu ausgelegt ist, Zugangsdaten und -geheimnisse und Berechtigungsnachweisanfragen angereichert durch Attribute, welche aus den abgegriffenen Daten abgeleitet werden, von der Vermittlereinheit bidirektional an eine anschließbares oder angeschlossenes externe Authentifikations- und Berechtigungsprüfeinheit (IAM) weiterzuleiten, wobei die Authentifizierungs- und Berechtigungsprüfeinheit die Zugangsdaten und -geheimnisse überprüft und gemäß einer festgelegten Berechtigungspolice der ersten Kommunikationseinrichtung und dem Netzwerkadapter als Stellvertreter eine Berechtigung zum Senden und/oder Empfangen der Daten über die genannten Anschlusseinheiten durch Ausstellen und Zurücksenden eines Berechtigungsnachweises, nachträglich bescheinigt.

## Beschreibung

Die Erfindung betrifft einen Netzwerkadapter geeignet zum Unterstützeneines berechtigten Sendens und/oder Empfangens von Daten von einer ersten Kommunikationseinrichtung in ein und/oder von einem Kommunikationsnetz sowie ein zugehöriges Verfahren und ein zugehöriges Computerprogrammprodukt.

Heutige Industrieanlagen, Verkehrssicherungsnetze, Bahnsteuerungs-/-signalisierungsnetzwerke oder auch Energieverteilungsnetze umfassen eine Vielzahl von Geräten, die Daten, beispielsweise über den Zustand des Gerätes oder Diagnosedaten, über ein Kommunikationsnetz miteinander austauschen oder an zentrale Steuerungs- oder Überwachungsserver übertragen. Solche Geräte werden häufig als Internet-of-Things Geräte, kurz IoT Geräte oder als "Internet-der-Dinge" Geräte, bezeichnet. Daten, beispielsweise aus Industrieanlagen, sollen zur Analyse geschützt an einen Internet-of-Things-Server, der entweder nahe der Industrieanlage oder in ein entfernt angeordnetes gemeinschaftlich genutztes Serversystem, auch als Cloud bezeichnet, übertragen werden. Die Daten können dort beispielsweise ausgewertet werden, um zukünftige Defekte rechtzeitig zu erkennen, um Maschinenparameter zu optimieren oder um Angriffe oder Manipulationen der Industrieanlage zu erkennen. Aus Kostengründen wird dabei in der Regel für die Datenübertragung ein öffentliches Netz, beispielsweise das Internet, oder ein Büronetzwerk oder Fabriknetz verwendet.

Eine wichtige Sicherheitsanforderung an ein OT-Netzwerk (operation technology netzwerk) besteht darin, dass ein einem OT-Netzwerk zwei Geräte nur dann miteinander kommunizieren dürfen, wenn sie dazu berechtigt sind und/oder wenn diese Geräte zumindest eine Integritätsprüfung unterzogen werden.

Der Begriff "Sicherheit" bezieht sich im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört unter anderem zum Begriff "Sicherheit".

OT bezeichnet die Verwendung von Hardware und Software zur Kontrolle von industriellem Equipment. OT umfasst spezialisierte Systeme, die zum Beispiel in der Fertigung, im Energiesektor, in der Medizin, in der Bautechnik und in anderen Branchen verwendet werden. Da manche Automatisierungsnetzwerke spezielle Echtzeit- und Betriebssicherheits-Anforderungen erfüllen müssen und in manchen Automatisierungsnetzwerken bzw. Verkehrs- bzw. Bahnnetzwerken Altgeräte mit unzureichendem Zugriffsschutz im Einsatz, wird die Betriebssicherheit oftmals über eine strikte Netzisolation, auch als Perimeterschutz bezeichnet, realisiert. Dies bedeutet, dass eine direkte, bidirektionale Anbindung von Geräten an externe Systeme nicht möglich ist, da hierdurch das Schutzniveau der Anlagennetze gefährdet ist.

Möglich sind Datendioden oder Einweg-Gateways, die eine rückwirkungsfreie Anbindung eines Anlagennetzwerks an ein externes bzw. öffentliches Netzwerk ermöglichen. Durch ein solches Einweg-Gateway wird gewährleistet, dass nur Daten aus der Industrieanlage, die eine Netzwerkzone mit hoher Sicherheitsrelevanz darstellt, heraus übertragen werden können. Eine Übertragung von Daten vom externen Netz, das eine Netzwerkzone mit eventuell geringerer Sicherheitsrelevanz darstellt, in das Anlagennetz ist weder direkt möglich, noch sollten Daten aus Signalisierungsprotokollen oder anderweitigen Datenquellen vom externen Netzwerk in das Anlagennetz eingebracht werden können. Durch diese strikte Datenflusskontrolle wird verlässlich verhindert, dass von einem externen Netzwerk aus, der Betrieb der Anlage beeinflusst oder beeinträchtigt werden kann.

Bekannt ist die von der Firma Siemens vertriebene Data Capture Unit (DCU, www.siemens.com/dcu). Die kleine Hardware-Netzwerkkomponente gewährleistet eine zuverlässige physische (galvanische) Trennung. Das verhindert, dass das kritische OT und das offene Netzwerk interagieren. Die Datenübertragung erfolgt dabei induktiv. Die Qualität des abgegriffenen Signals wird nur minimal beeinflusst. Zwischen beiden Netzwerken gibt es keine direkte Leitungsverbindung. Jeder Versuch, Daten über die DCU in das kritische Netzwerk zu schicken, wird dadurch verhindert.

Ein UGS (Undirectional Gateway System) zur Sicherstellung von Einwegkommunikation ist in EP 3 772 206 A1 beschrieben. Im Ethernet Standard wird zwischen dem Media Dependent Interface (MDI) für die Übertragung auf Leitungen und dem Media Independent Interface (MII) zur Kommunikation mit dem weitern Ethernet-Chipsatz unterschieden. Der dort beschriebene Zwischenstecker dient zum unidirektionalen Abgriff von Netzwerckommunikation über die MDI Schnittstelle oder die MII Schnittstelle.

Aus EP 3 501 154 B1 ist ein Verfahren zum Bereitstellen einer gesicherten Kommunikation zwischen mindestens zwei Kommunikationspartnern innerhalb eines echtzeitfähigen Kommunikationsnetzwerkes bekannt. Dabei werden mindestens zwei Schnittstellen bereitgestellt, wobei jedem Kommunikationspartner eine solche Schnittstelle zugeordnet ist. Um Angriffe zu erkennen und ggf. abzuwehren, wird die Integrität von Nachrichten zwischen den Kommunikationspartnern überwacht. Bevor sie miteinander kommunizieren können, müssen sich die Kommunikationspartner an einer Prüfungsstelle authentifizieren. Mit diesem Verfahren wird die Integrität und die Herkunft der Daten, die über die Kommunikationsstrecke geschickt werden, überwacht und sichergestellt.

Das erläuterte Verfahren löst jedoch nicht, einzelne Geräte, meist Altgeräte, bzw. Kommunikationseinrichtungen mit keinem oder unzureichendem Sicherheitsstandard in ein solches OT-Netzwerk einzubinden bzw. im OT-Netzwerk zu betreiben.

Eine weitere Anforderung im OT-Netzwerk ist, dass die Kommunikation zwischen bestehenden Geräten und neu eingebrachten Geräten überwacht werden, welche der Gegenstand der genannten Patentschrift ebenfalls nicht erfüllt.

Die Aufgabe der Erfindung besteht darin, eine/ein gegenüber des eingangs genannten Standes der Technik verbesserte Vorrichtung bzw. Verfahren sowie eine verbesserte Anordnung bzw. anzugeben.

Diese Aufgabe wird durch die unabhängigen Ansprüche gelöst. Vorteilhafte Weiterbildungen sind Gegenstand der abhängigen Ansprüche.

Die Erfindung beansprucht einen Netzwerkadapter geeignet zum Vermitteln bzw. Unterstützen eines Sendens und/oder Empfangens von Daten von einer ersten Kommunikationseinrichtung in ein und/oder von einem Kommunikationsnetz, aufweisend:
- eine erste Anschlusseinheit, die gegebenenfalls über eine Netzwerkschnittstelle mit der mindestens einen ersten Kommunikationseinrichtung zur bidirektionalen Übertragung von Daten physikalisch verbindbar bzw. koppelbar ist,
- eine zweite Anschlusseinheit, die mit mindestens einer zweiten Kommunikationseinrichtung des Kommunikationsnetzes zur bidirektionalen Übertragung von Daten physikalisch verbindbar ist,
- eine Vermittlereinheit, die dazu konfiguriert ist, eine Authentifizierung basierend auf Zugangsdaten und -geheimnissen stellvertretend für die erste Kommunikationseinrichtung und für den Netzwerkadapter selbst sowie parallel einen Berechtigungsnachweis (z.B. Zugriffs-/access token) anzufragen, der der ersten Kommunikationseinrichtung ein berechtigtes Senden und/oder Empfangen der Daten über die genannten Anschlusseinheiten im Nachgang des Sendens und/oder Empfangens der Daten bescheinigt, und
- eine Datenabgriffeinheit, die dazu konfiguriert ist, die an der ersten Anschlusseinheit durchgeleiteten Daten abzugreifen und eine Datenverbindung zur Vermittlereinheit herzustellen, über welche die abgegriffenen Daten an die Vermittlereinheit übertragbar sind oder übertragen werden, und
- eine dritte Anschlusseinheit, die dazu ausgelegt ist, Zugangsdaten und -geheimnisse und Berechtigungsnachweisanfragen angereichert durch Attribute, welche aus den abgegriffenen Daten abgeleitet werden, von der Vermittlereinheit bidirektional an eine gegebenenfalls abgesetzt/remote anschließbares/angeschlossenes externe Authentifikations- und Berechtigungsprüfeinheit weiterzuleiten, wobei die Authentifizierungs- und Berechtigungsprüfeinheit die Zugangsdaten und - geheimnisse überprüft und gemäß einer festgelegten Berechtigungspolice der ersten Kommunikationseinrichtung und dem Netzwerkadapter als Stellvertreter eine Berechtigung zum Senden und/oder Empfangen der Daten über die genannten Anschlusseinheiten durch Ausstellen und Zurücksenden eines Berechtigungsnachweises, nachträglich bescheinigt.

Die Vermittlereinheit kann die Authentifizierung basierend auf Zugangsdaten und -geheimnissen stellvertretend für den Netzwerkadapter selbst anstelle für die erste Kommunikationseinrichtung oder zusätzlich zur ersten Kommunikationseinrichtung zu initiieren und einen Berechtigungsnachweis anfragen.

Die dritte Anschlusseinheit kann von der Vermittlereinheit empfangene Berechtigungsnachweise an ein anschließbares oder angeschlossenes externes Überwachungseinheit weiterzuleiten. Dort kann eine Überprüfung (insbesondere Berechtigungsnachweisüberprüfungen wie die Überprüfung der Signatur, des Gültigkeitszeitraums sowie der ausgedrückten Berechtigungen des Nachweises) stellvertretend für einen Kommunikationspartner (zweite Kommunikationseinrichtung) der ersten Kommunikationseinrichtung stattfinden.

Die Zugangsdaten und Zugangsgeheimnisse können zusammen mit davon abgeleiteten kryptographischen Informationen zur deren Überprüfung an die Authentifikations- und Berechtigungsprüfeinheit weitergeleitet werden.

Die Authentifikations- und Berechtigungsprüfeinheit kann ein IAM-System (Identify and Access management system) sein. Ein spezielles IAM-System ist z.B. ein Zero Trust fähiges Identitäts-, Authentifikations- und Zugriffsverwaltungsystem, welches beispielsweise unter https://nvlpubs.nist.gov/nistpubs/SpecialPublications/NIST.SP .800-207.pdf beschrieben ist.

Die mindestens eine zweite Kommunikationseinrichtung kann als eine Netzwerkschnittstelle ausgebildet sein, die dazu eingerichtet ist, Daten zu mindestens einer weiteren Kommunikationseinrichtung bidirektional zu leiten.

Attribute können Befehle zu einer Aktion wie Lesen, Schreiben, Löschung und/oder Parameterwerte wie z.B. Objekt A beinhalten. Eine Aktion kann beispielweise sein: "Erhöhung des Termperaturwertes in Sensordaten".

Die Netzwerkschnittstelle kann dazu konfiguriert sein, die Daten zur Überwachungseinheit zum Abgleich derer mit den über die dritte Anschlusseinheit übertragenen Daten zu leiten.

Der Berechtigungsnachweis kann in einen vorzugsweise hardware-basierten Vertrauensanker integriert sein. Es kann von einem Hersteller als Gerätezertifikat hinterlegt sein kann.

Die Datenabgriffeinheit kann eine mediumabhängige (MDI) und/oder eine mediumunabhängige Schnittstelle (MII) aufweisen, über die die an der ersten Anschlusseinheit eingehenden Daten zur Vermittlereinheit geleitet werden.

Die Datenabgriffeinheit kann eine rückwirkungsfreie Datendiode (DCU) aufweisen, über die die an der ersten Anschlusseinheit eingehenden Daten zur Vermittlereinheit unidirektional geleitet werden.

Die Vermittlereinheit kann dazu eingerichtet sein, eine Warn- und/oder Alarmmeldung gegebenenfalls von der Überwachungseinheit entgegenzunehmen, die ermöglicht, einen sicheren Betriebszustand im Kommunikationsnetz herzustellen, wenn die Authentifizierungs- und Berechtigungsprüfeinheit die Berechtigung zum Senden und/oder Empfangen der Daten nachträglich abgelehnt hat.

Das Herstellen eines sicheren Betriebszustandes kann z.B. durch Trennen der Datenverbindung, Ausleiten in ein externes Monitoringnetzwerk (auch Honeynet genannt) oder durch Senden von Ersatzdaten (substitute values) durch der ersten Kommunikationseinrichtung, die als Gerät oder auch als ein Sensor ausgeprägt sein kann.

Durch die ausgegebene Alarm- und/oder Warnmeldung kann eine Gegenmaßnahme eingeleitet werden. Die Gegenmaßnahme kann eine physikalische Unterbrechung der Datenverbindung über die zweite Anschlusseinheit zu der mindestens einen zweiten Kommunikationseinrichtung herbeizuführen.

Der Netzwerkadapter ermöglicht es, Monitoring Funktionalität zur Überwachung von Berechtigungen von Kommunikationseinrichtungen z.B. Geräte in OT Netzwerke einzubringen. Zusätzlich kann ein Trust Anchor T (Vertrauensanker) im Netzwerkadapter vorgesehen sein, welcher einen Netzwerkadapter-spezifischen Schlüssel enthält, welcher u.a. für die Identifikation und Authentifizierung des Netzwerkadapters und als Stellvertreter für die ersten Kommunikationseinrichtung gegenüber Kommunikationsnetz dient.

Dies ist insbesondere für existierende Infrastrukturen (sog. Legacy Systeme) und im Zusammenhang mit Time Sensitive Networking (TSN) und damit erhöhten Quality of Service - Kommunikationsanforderungen vorteilhaft. Ein Austausch von Komponenten oder eine Abänderung des Aufbaus ist nachträglich sehr aufwändig. Eine Integration des Netzwerkadapters hingegen ist unaufwändig, wenn der Abgriff der Kommunikation unter Zuhilfenahme der Datenabgriffseinheit rückwirkungsfrei erfolgt. Damit ergeben sich noch weitere Vorteile:
- Erkennung von Systemmanipulation/Angriffen wie z.B.
   o Durch Integration von Fremdkomponenten
   o Manipulation von Kommunikation im Netzwerk
   o Unautorisierte Interaktionsversuche
- Nachweisbarkeit von aufgezeichneter Kommunikation (nonrepudiation / juridical recording)
- Unterstützung von reaktiven Maßnahmen (z.B. generieren von Warn-/Alarmmeldungen und ggf. Trennen von befallenen Systemen)
- Unterstützung von Zero Trust Architecture Prinzipen wie die Realisierung der Authentifizierung von Geräten (hier der Netzwerkadapter) und technische User (hier: der Authentisierungsclient/proxy für die Kommunikationseinrichtung bzw. Gerät), kontextbezogene attributbasierte Zugriffskontrolle (z.B.: basierend auf Monitoring-, Erkennungs- und Konfigurations-Zustandsattributen der ersten Kommunikationseinrichtung) sowie Kommunikationsverkehr- Monitoring und Integritätsüberwachung.

Beansprucht wird ferner eine Kommunikationsanordnung umfassend einen oder mehrere solche Netzwerkadapter, wobei an jedem Netzwerkadapter ein oder mehrere erste Kommunikationseinrichtungen angeschlossen sind.

Mit anderen Worten ausgedrückt besteht eine m:n-Beziehung zwischen der Kommunikationseinrichtungen und dem Netzwerkadapter.

Beansprucht wird ferner ein Verfahren zum Unterstützen eines Sendens und/oder Empfangens von Daten von einer ersten Kommunikationseinrichtung in ein und/oder von einem Kommunikationsnetz, aufweisend folgende Verfahrensschritte:
- Bereitstellen einer bidirektionalen Datenverbindung, über die Daten zu/von mindestens einer ersten Kommunikationseinrichtung in ein und/oder von einem Kommunikationsnetz übertragen werden,
- Abgreifen der von der ersten Kommunikationseinrichtung gesendeten und/oder empfangenen Daten, welche über eine weitere Datenverbindung zu einer Vermittlereinheit übertragen werden,
- Bereitstellen von Zugangsdaten und -geheimnissen stellvertretend für die erste Kommunikationseinrichtung und für den Netzwerkadapter selbst sowie paralleles Anfragen eines Berechtigungsnachweises, der der ersten Kommunikationseinrichtung ein berechtigtes Senden und/oder Empfangen der Daten über die genannten Datenverbindungen im Nachgang des Sendens und/oder Empfangens der Daten bescheinigt,
- Durchführen einer Authentifizierung basierend auf den Zugangsdaten und Zugangsgeheimnissen und einer Berechtigungsprüfung nach der mit Attributen angereicherten Anfrage des Berechtigungsnachweises, wobei die Attribute aus den abgegriffenen Daten abgeleitet werden, und
- Bescheinigen einer Berechtigung nachträglich zum Senden und/oder Empfangen der Daten über die genannten Anschlusseinheiten gemäß einer festgelegten Berechtigungspolice durch Ausstellen und Senden eines Berechtigungsnachweises an die erste Kommunikationseinrichtung und den Netzwerkadapter als Stellvertreter.

Die oben genannten Verfahrensschritte können computerimplementiert sein. Die Module bzw. Einheiten bzw. die Vorrichtung, die dazu eingerichtet sind, solche Verfahrensschritte auszuführen, können hardware-, firmware- und/oder softwaremäßig implementiert sein und jeweils für sich einen Prozessor aufweisen oder mit einem übergeordneten Prozessor kommunizieren.

Ein weiterer Aspekt der Erfindung ist ein Computerprogramm(-produkt) mit Programmcodemitteln zur Durchführung des Verfahrens nach einem der oben erwähnten Ausführungsformen, wenn es in einer Anordnung der oben genannten Art bzw. verteilt auf den Vorrichtungen der oben genannten Art abläuft oder auf einem computerlesbaren Speichermedium gespeichert ist.

Das Computerprogramm bzw. -produkt kann auf einem computerlesbaren Speichermedium gespeichert sein. Das Computerprogramm bzw. -produkt kann in einer üblichen Programmiersprache (z.B. C++, Java) erstellt sein. Die Verarbeitungseinrichtung kann einen marktüblichen Computer oder Server mit entsprechenden Eingabe-, Ausgabe- und Speichermitteln umfassen. Diese Verarbeitungseinrichtung kann in der Vorrichtung oder in deren Mitteln integriert sein.

Das Verfahren sowie das Computerprogramm(-produkt) können analog zum oben genannten Netzwerkadapter und dessen Weiterbildungen weiter- bzw. ausgebildet sein.

Weitere Vorteile, Einzelheiten und Weiterbildungen der Erfindung ergeben sich aus der nachfolgenden Beschreibung von Ausführungsbeispielen in Verbindung mit den Zeichnungen.
- Figur 1: zeigt beispielhaft eine Ausgestaltung des erfindungsgemäßen Netzwerkadapters,
- Figur 2: zeigt beispielhaft eine weitere Ausgestaltung des erfindungsgemäßen Netzwerkadapters und seine Umgebung und
- Figur 3: zeigt beispielhaft eine Ausführungsform umfassend eine Authentifizierungsprüfung und Autorisierung.

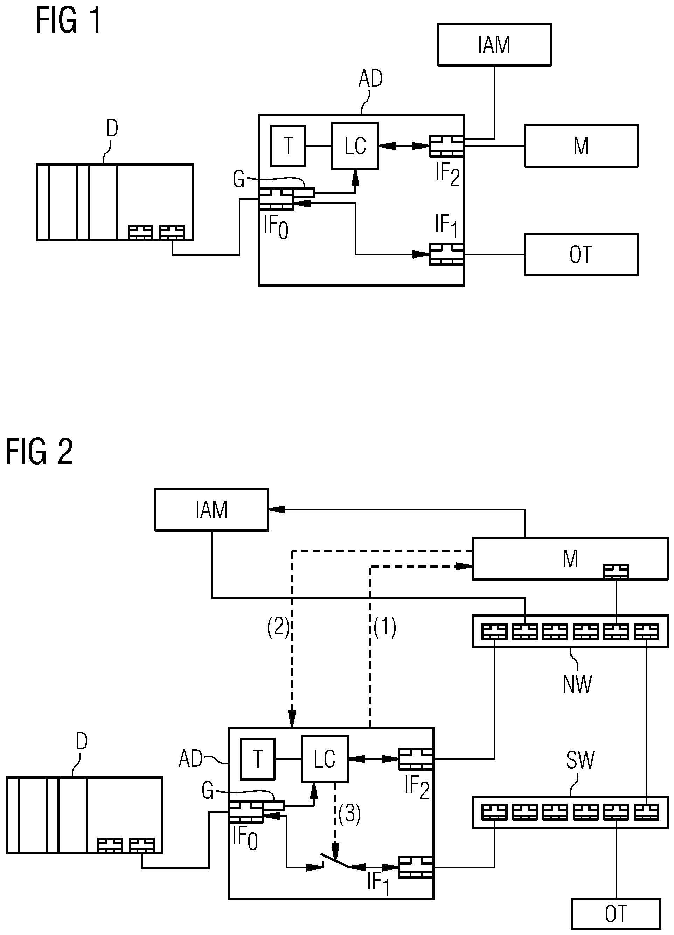

Figur 1 zeigt beispielhaft eine Ausgestaltung des erfindungsgemäßen Netzwerkadapters Der Netzwerkadapter dient zum Vermitteln bzw. Unterstützen eines Sendens und/oder Empfangens von Daten von einer ersten Kommunikationseinrichtung z.B. OT-Gerät D in ein und/oder von einem Kommunikationsnetz, z.B. einem OT-Netzwerk OT, umfassend mindestens eine zweite Kommunikationseinrichtung. Es können ein oder mehrere (erste) Kommunikationseinrichtungen, z.B. (OT-)Gerät D an den Netzwerkadapter angeschlossen sein. Die unten näher beschriebene Vermittlungseinheit kann gegebenenfalls entscheiden, welche erste Kommunikationseinrichtung mit welcher zweiten Kommunikationseinrichtung und/oder mit der unten näher beschriebenen Authentifikations- und Berechtigungsprüfeinheit kommunizieren darf.

Der Netzwerkadapter dient dazu, die Kommunikation auszuleiten und für eine Berechtigungsüberwachung gegebenenfalls mit Integritätsüberwachung in einer Authentifikations- und Berechtigungsprüfeinheit IAM, im folgenden Berechtigungsprüfeinheit genannt, bereitzustellen, die gegebenenfalls separat bzw. extern direkt oder abgesetzt (remote) an den Netzwerkadapter über eine Anschlusseinheit IF2 an mit dem Netzwerkadapter verbindbar ist oder verbunden ist. Über IF2 kann beispielsweise eine zwischen den Anschlusseinheiten IF0 und IF1 abgegriffene Kommunikation, die nachstehend näher erläutert wird, optional an ein weiteres (Monitoring-)Netzwerk, das eine Überwachungseinheit M umfasst, ausgeleitet werden.

Zusätzlich verfügt der Netzwerkadapter über einen Logikkontroller LC zur Implementierung zusätzlicher Sicherheitsfunktionalitäten lokal auf dem Netzwerkadapter selbst. Der Logickontroller dient als eine Art Vermittlereinheit. Ein Logickontroller kann ggf. als CPU oder Logic Processor, welcherprogrammierbar ist, ausgebildet sein. Zusätzlich kann die Vermittlungseinheit Sicherheitsfunktionalitäten wie Paketfilter, Authentisierungsschnittstellen (Authentisierungsclient/- proxy für das OT-Gerät D) und gegebenenfalls eine Berechnung einer Integritätsinformation zu implementieren. Der Logikkontroller ist dazu konfiguriert, um eine Authentifizierung basierend auf Zugangsdaten und -geheimnissen stellvertretend für das OT-Gerät D und parallel einen Berechtigungsnachweis (Zugriffs/access token) bei der Berechtigungsprüfeinheit anzufragen. Durch den Berechtigungsnachweis wird im Nachgang bescheinigt, dass die Datenübertragung über die genannten Anschlusseinheiten IF0 und IF1 berechtigterweise erfolgt ist. Letzterer Vorgang wird auch Autorisierung genannt. Die Zugangsdaten und - geheimnisse werden in der Regel zusammen mit davon abgeleiteten kryptographischen Informationen zur deren Überprüfung an die Authentifikations- und Berechtigungsprüfeinheit (IAM) weiterleitbar sind oder weitergeleitet werden. Solche kryptographischen Informationen können Schlüsselinformationen oder auch Hashwerte umfassen, wenn die Zugangsdaten und -geheimnisse verschlüsselt übertragen werden. Zusätzlich kann ein Trust Anchor T (Vertrauensanker) vorgesehen sein, welcher einen Netzwerkadapter-spezifischen Schlüssel enthält, welcher u.a. für die Identifikation und Authentifizierung des Netzwerkadapters gegenüber einem OT-Netzwerk OT dient. Gegebenenfalls kann damit auch die Implementierung eines Integritätsschutzes erreicht werden. Trust Anchor können in Software oder Hardware realisiert werden. Ein Beispiel für einen Hardware-basierten Trust Anchor stellt ein TPM (Trusted Platform Module, https://en.wikipedia.org/wiki/Trusted_Platform_Module) dar.

Das OT-Netzwerk OT kann über eine Anschlusseinheit IF1 mit dem Netzwerkadapter drahtgebunden oder drahtlos per Funk mit gängiger Funktechnik verbunden werden. Eine Kommunikationseinrichtung kann an die Anschlusseinheit IF1 physikalisch verbunden sein. Diese Kommunikationseinrichtung kann als eine OT-Netzwerkschnittstelle SW z.B. Adapter, Netzwerkweiche (Switch), oder Netzwerkbrücke (Gateway), ausgebildet sein, die dazu eingerichtet ist, Daten zu mindestens einer weiteren Kommunikationseinrichtung bidirektional im OT-Netzwerk zu leiten.

Eine Netzwerkschnittstelle IF0 dient zum Anschluss des Geräts D, für welches die Authentifizierung sowie Autorisierung im Nachgang der Authentifizierung überprüft werden soll (ein- und ausgehend). An die Netzwerkschnittstelle IF0 können auch mehrere Geräte vergleichbar mit Gerät D angeschlossen werden. Über eine weitere Netzwerkschnittstelle IF1 wird die Kommunikation, welche über IF0 eingeht, unverändert ausgeleitet. Zudem wird über IF1 eingehende Kommunikation unverändert über IF0 wieder ausgegeben. Wird ein OT-Gerät über die Strecke IF0-IF1 mit dem Kommunikationsnetz verbunden, so verhält es sich derart, wie wenn das OT-Gerät direkt (d.h. ohne den Netzwerkadapter) mit dem Kommunikationsnetz verbunden ist.

Eine auf Ebene/Schicht 2 des OSI-Schichtenmodells, eines gängigen Kommunikationsmodells, erfolgter Abgriff der Netzwerckommunikation an der Anschlusseinheit IF0 kann durch eine Datenabgriffeinheit G realisiert sein. Diese kann beispielsweise über die sogenannte Media-dependent-Schnittstelle (Media abhängige) oder Media independent-Schnittstelle (media unabhängige) erfolgen. Die Datenabriffeinheit G greift die Kommunikation bidirektional ab (d.h. IF0→IF1 und IF1→IF0) und leitet sie unidirektional an den Logikkontroller aus. Eine weiter Ausgestaltung sieht vor, dass ein Ausleiten der Kommunikation etwa über induktive Kopplung mittels eine rückwirkungsfreien Datendiode erfolgen kann, so wie sie z.B. die Siemens Data Capture Unit (DCU, www.siemens.com/dcu) realisiert ist.

Der Netzwerkadapter wird dazu genutzt, die (auf der Anschlusseinheit IF0) abgehörten Nachrichten integritätsgeschützt an die ggf. zentrale Berechtigungsprüfeinheit IAM zu übertragen. Die Berechtigungsprüfeinheit überprüft hierbei die Zugangsdaten und -geheimnisse und gegebenenfalls daraus abgeleiteten kryptographischen Information und bescheinigt nachträglich gemäß einer festgelegten Berechtigungspolice der ersten Kommunikationseinrichtung, hier D, und dem Netzwerkadapter als Stellvertreter, dass das Senden/Empfangen von Daten über die genannten Anschlusseinheiten IF0 und IF1 durch Ausstellen und Zurücksenden eines Berechtigungsnachweises, berechtigt war/ist.

Die Vermittlungseinheit nimmt eine Warn- und/oder Alarmmeldung gegebenenfalls von der Überwachungseinheit M entgegenzunehmen, die ermöglicht, einen sicheren Betriebszustand im Kommunikationsnetz herzustellen, Berechtigungsprüfeinheit IAM die Berechtigung zum Senden und/oder Empfangen der Daten nachträglich abgelehnt wird. Um den sicheren Betriebszustand herzustellen, kann - wie unten näher erläutert - der die Datenverbindung zwischen IF0 und IF1 unterbrochen werden. Figur 2 zeigt beispielhaft eine Ausgestaltung eine Kommunikationsanordnung, in das der erfindungsgemäße Netzwerkadapters AD integriert sein kann.

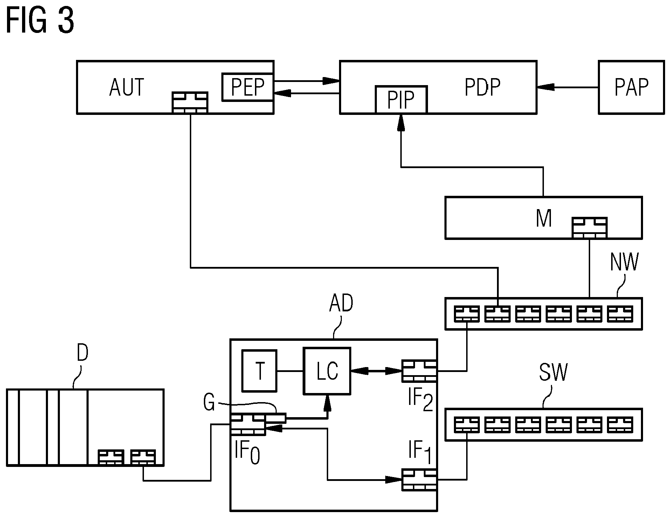

Ferner wird - wie in Figur 2 und 3 dargestellt - die im Kommunikationsnetz, im Beispiel OT-Netzwerk, auftretende Kommunikation über einen sog. SPAN Port der lokalen Netzwerkschnittstelle SW ebenfalls an die Berechtigungsprüfungseinheit übertragen. Bei einem SPAN Port handelt es sich um einen dedizierten Port auf einem verwalteten Switch, um Kopien von Netzwerkpaketen an dort angeschlossene Tools zu senden. Die Berechtigungsprüfungseinheit führt eine Überprüfung auf Übereinstimmung durch. D.h. sie führt eine Verifikation/einen Abgleich durch, dass die über IF0 und IF1 geführte Kommunikation identisch (d.h. nicht manipuliert und vollständig) zu den über IF2 vom Netzwerkadapter gelieferten Daten ist. Falls Manipulationen erkannt werden, wird eine entsprechende Warn-/Alarmmeldung generiert. Der Abgriff der Netzwerkkommunikation aus dem OT-Netzwerk über einen SPAN stellt eine optionale (nicht zwingend notwendige) Variante dar, um weitere Prüfmöglichkeiten zu ermöglichen. Hierüber lässt sich der Datenverkehr, welche im OT-Netzwerk auftritt, ebenfalls mit in die Auswertung mit einbeziehen (d.h. eine mehrstufige Überprüfung durchführen) bzw. es lassen sich auch OT-Gerät überwachen, die über keinen solchen Netzwerkadapter AD verfügen.

Der Netzwerkadapter leitet - wie in Figur 2 und 3 dargestellt - die aufgezeichnete Kommunikation über IF2 über eine Netzwerkschnittstelle NW an ein externes (Monitoring-)Netzwerk zu einer Überwachungseinheit M weiter. In der dargestellten Ausprägung ist im externen Netzwerk eine separate Berechtigungsprüfungseinheit IAM angeordnet. In der einfachsten Realisierung werden die über IF0 und IF2 geleiteten Nachrichten unverändert an die Berechtigungsprüfungseinheit ausgeleitet. In einer Ausführungsform werden Hash-Werte der Nachrichten erstellt und diese an die Berechtigungsprüfungseinheit geschickt, so dass diese dort gespeichert und mit historischen Aufzeichnungen effizient abgeglichen werden können. In einer weiteren Ausführungsform werden schlüsselbasierte Hash-Verfahren, wie z.B. das HMAC-Verfahren (https://en.wikipedia.org/wiki/HMAC), oder digitale Signaturverfahren angewendet, um signierte Hash-Repräsentationen der Nachrichten zu berechnen und an die Berechtigungsprüfungseinheit zu übertragen. Hierzu wird das Schlüsselmaterial und die Funktionalität des Trust Anchors verwendet. Ein Vorteil dieser Ausführungsform ist, dass die aufgezeichneten Nachrichten eindeutig dem Netzwerkadapter bzw. dem OT-Gerät zugeordnet werden können, so dass die Authentizität, die Identität bzw. die Herkunft der Aufzeichnung zur Berechtigung eines OT-Gerät verifiziert werden kann.

Die Überwachungseinheit M kann feststellen, ob eine Nachricht (welche von einem ersten OT-Gerät D an ein weiteres/zweites OT-Gerät, das an die Netzwerkschnittstelle SW angeschlossen ist, gesendet wurde) manipuliert wurde bzw. in das Netzwerk durch ein anderes Gerät eingebracht wurde, indem es die Nachricht, die vom ersten OT-Gerät verschickt wurde mit der abgleicht, die vom weiteren OT-Gerät empfangen worden ist. Dabei ist die normale Laufzeit der Nachrichten auf dem Netzwerk zu beachten. Es kann auch festgestellt werden, wenn eine Nachricht das gewünschte Ziel nicht erreicht. Werden Manipulationen erkannt, kann eine Warn-/Alarmmeldung generiert werden. Dazu sollten beide OT- Gerät jeweils mit einen eigenen Netzwerkadapter angeschlossen sein.

Der Netzwerkadapter kann sowohl auf Feldkommunikationsebene wie auch auf der Automatisierungsebene bzw. der Kommunikation zwischen diesen Ebenen eingesetzt werden.

In einer weiteren Ausführungsform ist die Kommunikation zwischen IF0 und IF1 durch den Logikkontroller LC schaltbar (nur per Befehl über die IF2-Anschlusseinheit). Dies ermöglicht es, auf erkannte Anomalien bzw. Angriffe im Netzwerk zu reagieren und Komponenten vom Netzwerk zu trennen (offline zu nehmen), um so den Verbreitungsgrad von Angriffen einzugrenzen. Wie in den zuvor vorgestellten Ausführungsformen werden über IF2 die aufgezeichnete Kommunikation an die Überwachungseinheit M übertragen (siehe Schritt (1)) und dort mit den über den SPAN-Port von SW abgegriffenen Daten bzw. mit Daten von anderen Netzwerkadaptern abgeglichen. Im Falle eines erkannten Angriffs wird nicht nur eine Alarmmeldung erzeugt, sondern unmittelbar auf die Bedrohung reagiert, um somit einen sicheren Betriebszustand im Kommunikationsnetz herzustellen. Es wird dann ein Kontrollbefehl von der Überwachungseinheit M an den Netzwerkadapter gesendet (siehe Schritt (2)). Der Logikkontroller reagiert hierauf und unterbricht die schaltbare Verbindung zwischen IF0 und IF1, so dass das OT-Gerät D vom Netzwerk getrennt wird. Weitere (vom OT-Gerät ausgehende) Nachrichten können weiterhin über die Strecke IF0-IF2 ausgeleitet und in einem vom OT-Netzwerk isolierten Netzsegment (z.B. in einem Honeynet, https://en.wikipedia.org/wiki/Honeynet_Project) beobachtet und analysiert werden.

Figur 3 zeigt beispielhaft eine Ausführungsform umfassend eine Authentifizierungsprüfung und Autorisierung.

Die Berechtigungsprüfungseinheit IAM aus Figur 2 kann um das in Figur 3 dargestellte System erweitert werden. Dieses erlaubt auch zu erkennen, wenn Geräte miteinander kommunizieren, die dazu nicht autorisiert sind.

Hierzu wird durch den Netzwerkadapter, anders als in den vorgenannten Ausgestaltungsformen, nicht notwendigerweise der (gesamte oder gefilterte) Datenverkehr ausgeleitet. Vielmehr überprüft der Netzwerkadapter (u.U. zusätzlich), ob das OT-Gerät dazu autorisiert ist, mit einem bestimmten Kommunikationspartner bzw. Kommunikationseinrichtung zu kommunizieren. Dies kann durch Überprüfung von MAC-Adressen und/oder von IP-Adressen geschehen, bzw. von anderen Adressen, die für das eingesetzte Protokoll spezifisch sind. Außerdem können die Daten eines eventuell vorhandenen Netzwerkadapters am Kommunikationsziel verwendet werden, um die beiden Kommunikationspartner eindeutig zu identifizieren, z.B. um resistent gegen IP-Spoofing Angriffe zu sein. Im einfachsten Fall geschieht diese Überprüfung mit Hilfe von in den Netzwerkadapter einprogrammierten Regeln, welche im Logikkontroller LC implementiert sein können.

In einer Ausgestaltung werden Regeln analog zur Zero Trust Architektur (https://www.nist.gov/publications/zero-trustarchitecture) dynamisch und zentral verwaltet. Hierzu wird nach Ausleiten eines Datenverkehrs, basierend auf dem Authentisierungsclient/-proxy für das OT-Gerät, der im Logikkontroller realisiert ist, ein Authentifizierungs- und Autorisierungsprozess unter Nutzung der im Trust Anchor gespeicherten Adapter Credentials (Berechtigungsnachweis) umgesetzt. Wie in Figur 2 dargestellt, wird im Anschluss an den Authentifizierungsschritt über Policy Information Points PIP ein Autorisierungsprozess in einem Security Token Service AUT sowie über den Policy Enforcement Point PEP angestoßen. Nach Überprüfung des Identitätsnachweises und der Berechtigungspolice im Policy Decision Point PDP, welche durch den Policy Administration Point PAP verwaltet werden, teilt der PDP dem PEP die Autorisierungsentscheidung (Erlaubnis oder Ablehnung) und optional weitere obligatorische Handlungsanweisungen mit (z.B. die Verpflichtung des PEPs die Überwachungseinheit M über eine negative Autorisierungsentscheidung zu informieren oder die Verpflichtung des PEPs eine Instruktion zum Trennen bzw. Unterbrechen des Kommunikationskanals zwischen IF0 und IF1 an den Logikkontroller zu senden - siehe Figur 2). Im Fall einer positiven Autorisierungsentscheidung wird nun vom Security Token Service ein Security Token als finales Ergebnis des Authentifizierungs- und Autorisierungsprozesses an den Authentisierungsclient geschickt. Der Logikkontroller kann die Überwachungseinheit diesen Security Token neben Teilen des ausgeleiteten Datenverkehrs weiterleiten und ihn somit über Details zur stattgefundenen Interaktion und des Authentifizierungs- sowie Autorisierungsprozesses des Authentisierungsclients/-proxies für das OT-Gerät D im gegebenen Kontext informieren. Die Überwachungseinheit ist dadurch in der Lage, passiv Autorisierungsentscheidungen und ggf. Handlungsanweisungen zu überprüfen und bei unautorisierten Interaktionen zu alarmieren, wenn OT-Gerät über den Netzwerkadapter unautorisiert versucht, mit einer anderen Kommunikationseinrichtung bzw. anderem Gerät über einen bestimmten Datenverkehr und in einen gegeben Ausführungskontext zu interagieren. Es ist auch ein automatisierter oder semi-automatisierter reaktiver Schritt im Anschluss an die Überprüfung der Berechtigungspolice möglich, wie z.B. die Unterbrechung von zukünftiger Kommunikation. Unter diesem optionalen automatisierten oder semi-automatisierten aktivem Reagieren ist gemeint, dass der PEP oder die Überwachungseinheit M über eine spezielle Schnittstelle dem Logikkontroller instruiert, den Kommunikationskanal - wie in Figur 2 Schritt (3) gekennzeichnet - zwischen IF0 und IF1 zu trennen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe/-schritte kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System (Cloud) abzulegen und darauf via Netzwerk zuzugreifen.

Unter "rechner-/computergestützt" bzw. "computerimplementiert" kann im Zusammenhang mit der Erfindung beispielsweise eine Implementierung des Verfahrens verstanden werden, bei dem insbesondere ein Prozessor bzw. eine Recheneinheit, der Teil eines Geräts, einer (Steuerungs)vorrichtung bzw. - anordnung bzw. -einheit und/oder eines Computers und/oder eines oder mehrerer Dienste in einer Rechnerwolke (Cloud) eines Diensterbringers sein kann, mindestens einen Verfahrensschritt des Verfahrens ausführt.

Sofern es in der nachfolgenden Beschreibung nicht anders angegeben ist, beziehen sich die Begriffe "abbilden", "nachbilden", "empfangen", "anwenden", "ausgeben", "bereitstellen" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt oder vorliegen können.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein. Unter einer "Speichereinheit" kann im Zusammenhang mit der Erfindung beispielsweise ein Speicher in Form von Arbeitsspeicher (engl. Random-Access Memory, RAM) oder eine Festplatte verstanden werden.

## Patentansprüche

1. Netzwerkadapter (AD) geeignet zum Unterstützen eines Sendens und/oder Empfangens von Daten von einer ersten Kommunikationseinrichtung in ein und/oder von einem Kommunikationsnetz, aufweisend:
- eine erste Anschlusseinheit (IF0), die mit der mindestens einen ersten Kommunikationseinrichtung zur bidirektionalen Übertragung von Daten physikalisch verbindbar ist,
- eine zweite Anschlusseinheit (IF1), die mit mindestens einer zweiten Kommunikationseinrichtung des Kommunikationsnetzes zur bidirektionalen Übertragung von Daten physikalisch verbindbar ist,
- eine Vermittlereinheit (LC), die dazu konfiguriert ist, eine Authentifizierung basierend auf Zugangsdaten und - geheimnissen stellvertretend für die erste Kommunikationseinrichtung (D) und für den Netzwerkadapter selbst sowie parallel einen Berechtigungsnachweis anzufragen, der der ersten Kommunikationseinrichtung ein berechtigtes Senden und/oder Empfangen der Daten über die genannten Anschlusseinheiten im Nachgang des Sendens und/oder Empfangens der Daten bescheinigt,
- eine Datenabgriffeinheit (G), die dazu konfiguriert ist, die an der ersten Anschlusseinheit (IF0) durchgeleiteten Daten abzugreifen und eine Datenverbindung zur Vermittlereinheit herzustellen, über welche die abgegriffenen Daten an die Vermittlereinheit übertragbar sind oder übertragen werden, und
- eine dritte Anschlusseinheit (IF2), die dazu ausgelegt ist, Zugangsdaten und Zugangsgeheimnisse und Berechtigungsnachweisanfragen angereichert durch Attribute, welche aus den abgegriffenen Daten abgeleitet werden, von der Vermittlereinheit bidirektional an eine anschließbare oder angeschlossene externe Authentifikations- und Berechtigungsprüfeinheit (IAM) weiterzuleiten, wobei die Authentifizierungs- und Berechtigungsprüfeinheit die Zugangsdaten und -geheimnisse überprüft und gemäß einer festgelegten Berechtigungspolice der ersten Kommunikationseinrichtung und dem Netzwerkadapter als Stellvertreter eine Berechtigung zum Senden und/oder Empfangen der Daten über die genannten Anschlusseinheiten durch Ausstellen und Zurücksenden eines Berechtigungsnachweises, nachträglich bescheinigt.

2. Netzwerkadapter nach dem vorhergehenden Anspruch, **dadurch gekennzeichnet, dass** die dritte Anschlusseinheit zudem dazu ausgelegt ist, von der Vermittlereinheit (LC) empfangene Berechtigungsnachweise an eine anschließbare oder angeschlossene externe Überwachungseinheit (M)zur dort stattfindenden Überprüfung weiterzuleiten.

3. Netzwerkadapter nach einem der vorhergehenden Ansprüche, **dadurch gekennzeichnet, dass** die Zugangsdaten und - geheimnisse zusammen mit davon abgeleiteten kryptographischen Informationen zu deren Überprüfung an die Authentifikations- und Berechtigungsprüfeinheit (IAM) weiterleitbar sind oder weitergeleitet werden.

4. Netzwerkadapter nach einem der vorhergehenden Ansprüche, **dadurch gekennzeichnet, dass** die mindestens eine zweite Kommunikationseinrichtung als eine Netzwerkschnittstelle (SW) ausgebildet ist, die dazu eingerichtet ist, Daten zu mindestens einer weiteren Kommunikationseinrichtung bidirektional zu leiten.

5. Netzwerkadapter nach dem vorhergehenden Anspruch 4, **dadurch gekennzeichnet, dass** die Netzwerkschnittstelle (SW) dazu konfiguriert ist, die Daten zur Überwachungseinheit (M) zum Abgleich derer mit den über die dritte Anschlusseinheit (IF2) übertragenen Daten zu leiten.

6. Netzwerkadapter nach einem der vorhergehenden Ansprüche, **dadurch gekennzeichnet, dass** die Zugangsdaten und - geheimnisse in einem Vertrauensanker, der vorzugsweise hardware-basiert ausgestaltet ist, integriert sind.

7. Netzwerkadapter nach einem der vorhergehenden Ansprüche, **dadurch gekennzeichnet, dass** die Datenabgriffeinheit eine mediumabhängige (MDI) und/oder eine mediumunabhängige Schnittstelle (MII) aufweist, über die die an der ersten Anschlusseinheit eingehenden Daten zur Vermittlereinheit geleitet werden.

8. Netzwerkadapter nach einem der vorhergehenden Ansprüche 1 bis 6, **dadurch gekennzeichnet, dass** die Datenabgriffeinheit eine rückwirkungsfreie Datendiode (DCU) aufweist, über die die an der ersten Anschlusseinheit eingehenden Daten zur Vermittlereinheit unidirektional geleitet werden.

9. Netzwerkadapter nach einem der vorhergehenden Ansprüche, **dadurch gekennzeichnet, dass** die Vermittlereinheit dazu eingerichtet ist, eine Warn- und/oder Alarmmeldung gegebenenfalls von der Überwachungseinheit (M) entgegenzunehmen, die ermöglicht, einen sicheren Betriebszustand im Kommunikationsnetz herzustellen, wenn die Authentifizierungs- und Berechtigungsprüfeinheit (IAM) die Berechtigung zum Senden und/oder Empfangen der Daten nachträglich abgelehnt hat.

10. Netzwerkadapter nach dem vorhergehenden Anspruch, **dadurch gekennzeichnet, dass** die Warn- und/oder Alarmmeldung die Vermittlungseinheit dazu veranlasst, als Gegenmaßnahme eine physikalische Unterbrechung der Datenverbindung über die zweite Anschlusseinheit zu der mindestens einen zweiten Kommunikationseinrichtung herbeizuführen.

11. Kommunikationsanordnung umfassend einen oder mehrere Netzwerkadapter nach einem der vorhergehenden Ansprüche, wobei an jedem Netzwerkadapter (AD) ein oder mehrere erste Kommunikationseinrichtungen (D) angeschlossen sind.

12. Verfahren zum Unterstützen eines Sendens und/oder Empfangens von Daten von einer ersten Kommunikationseinrichtung in ein und/oder von einem Kommunikationsnetz, aufweisend folgende Verfahrensschritte:
- Bereitstellen einer bidirektionalen Datenverbindung, über die Daten zu/von mindestens einer ersten Kommunikationseinrichtung in ein und/oder von einem Kommunikationsnetz übertragen werden,
- Abgreifen der von der ersten Kommunikationseinrichtung gesendeten und/oder empfangenen Daten, welche über eine weitere Datenverbindung zu einer Vermittlereinheit übertragen werden,
- Bereitstellen von Zugangsdaten und -geheimnissen stellvertretend für die erste Kommunikationseinrichtung und für den Netzwerkadapter selbst sowie paralleles Anfragen eines Berechtigungsnachweises, der der ersten Kommunikationseinrichtung ein berechtigtes Senden und/oder Empfangen der Daten über die genannten Datenverbindungen im Nachgang des Sendens und/oder Empfangens der Daten bescheinigt,
- Durchführen einer Authentifizierung basierend auf den Zugangsdaten und Zugangsgeheimnissen und einer Berechtigungsprüfung nach der mit Attributen angereicherten Anfrage des Berechtigungsnachweises, wobei die Attribute aus den abgegriffenen Daten abgeleitet werden, und
- Bescheinigen einer Berechtigung nachträglich zum Senden und/oder Empfangen der Daten über die genannten Anschlusseinheiten gemäß einer festgelegten Berechtigungspolice durch Ausstellen und Senden eines Berechtigungsnachweises an die erste Kommunikationseinrichtung und den Netzwerkadapter als Stellvertreter.

13. Verfahren nach dem vorhergehenden Anspruch, **dadurch gekennzeichnet, dass**
eine Warn- und/oder Alarmmeldung bereitgestellt wird, die einen sicheren Betriebszustand im Kommunikationsnetz herzustellen ermöglicht, wenn die Berechtigung des Sendens und/oder Empfangens der Daten nachträglich abgelehnt wird.

14. Verfahren nach dem vorhergehenden Anspruch, **dadurch gekennzeichnet, dass** durch die Alarm- und/oder Warnmeldung eine Gegenmaßnahme eingeleitet wird, die eine physikalische Unterbrechung des Sendens und/oder Empfangens der Daten von der ersten Kommunikationseinrichtung in das und/oder von dem Kommunikationsnetz auslöst.

15. Verfahren nach einem der vorhergehenden Verfahrensansprüchen, **dadurch gekennzeichnet, dass** die Zugangsdaten und Zugangsgeheimnisse zusammen mit davon abgeleiteten Informationen zu deren Überprüfung an die Authentifikations- und Berechtigungsprüfeinheit (IAM) weiterleitbar sind oder weitergeleitet werden.
